# EUROPEAN PATENT APPLICATION

(11) **EP 4 607 603 A1**
(43) Date of publication of application: **27.08.2025**
(21) Application number: 25159175.6
(22) Date of filing: 20.02.2025
(51) Int. Cl.: H01M 4/133, H01M 4/02

(54) **SILICON-CARBON PARTICLE AND PREPARATION METHOD THEREOF, ELECTROCHEMICAL APPARATUS, AND ELECTRONIC APPARATUS**

(30) Priority: 22.02.2024 CN 202410199920
(71) Applicant: Ningde Amperex Technology Limited, Ningde City, Fujian Province 352100 (CN)
(72) Inventor: LI, Liang, Ningde City, Fujian Province 352100 (CN)
(74) Representative: Icosa

(57) **Abstract**

An electrochemical apparatus includes a negative electrode plate and an electrolyte, where the negative electrode plate includes a negative electrode current collector and a negative electrode active material layer disposed on at least one surface of the negative electrode current collector and containing a negative electrode active material, the negative electrode active material including silicon-carbon particles and graphite particles. A surface of each silicon-carbon particle has a surface layer, a thickness of the surface layer is c µm, an average particle size of the silicon-carbon particles is d µm, and 0.42%<c/d<16.0%.

## Description

### TECHNICAL FIELD

This application relates to the field of energy storage technologies, and more specifically, to a silicon-carbon particle and a preparation method thereof, an electrochemical apparatus, and an electronic apparatus.

### BACKGROUND

Electrochemical apparatuses, due to their characteristics such as high energy density, high operating voltage, and light weight, have been widely used in electronic products such as mobile phones, notebook computers, and cameras. The safety performance of the electrochemical apparatuses cannot be ignored while the electrochemical performance of the electrochemical apparatuses is improved. As the requirements on the performance of the electronic products are improved, the requirements on the performance of the electrochemical apparatuses are also gradually improved.

It has been found through research that an electrochemical apparatus includes a negative electrode plate containing a negative electrode active material and an electrolyte. There may be performance differences between various negative electrode active materials in a same negative electrode plate, so that the negative electrode plate exhibits variability during cycling. This may deteriorate the cycling performance, swelling suppression, and rate performance of the electrochemical apparatus.

### SUMMARY

This application provides a silicon-carbon particle and a preparation method thereof, an electrochemical apparatus, and an electronic apparatus. The cycling performance, swelling suppression, rate performance, and the like of the electrochemical apparatus are significantly improved.

According to a first aspect, this application proposes an electrochemical apparatus. The electrochemical apparatus includes a negative electrode plate and an electrolyte, where the negative electrode plate includes a negative electrode current collector and a negative electrode active material layer disposed on at least one surface of the negative electrode current collector and containing a negative electrode active material, the negative electrode active material including silicon-carbon particles and graphite particles, where a surface of each silicon-carbon particle has a surface layer, a thickness of the surface layer is c µm, an average particle size of the silicon-carbon particles is d µm, and 0.42%<c/d<16.0%.

In the electrochemical apparatus of this application, the negative electrode active material includes the silicon-carbon particles and the graphite particles. The silicon-carbon particles are formed by compounding the silicon element and the carbon element, which can alleviate the volume change of silicon during charge and discharge cycles. The silicon-carbon particles and the graphite particles are used in combination, further alleviating the volume change of the silicon-carbon particles during charge and discharge cycles. The surface layer is formed during charge and discharge of the electrochemical apparatus.

The thickness c µm of the surface layer of the silicon-carbon particle and the average particle size d µm of the silicon-carbon particles satisfy: 0.42%<c/d<16.0%. The thickness of the surface layer of each silicon-carbon particle is not excessively large. This indicates that during charge and discharge, the volume expansion of the silicon-carbon particles is relatively small, and the surface layer is relatively stable. In addition, this also means that the cycling stability of the silicon-carbon particles is good, the performance differences of the silicon-carbon particles are small, and the distribution of the silicon element between the silicon-carbon particles is relatively uniform. Furthermore, due to the compactness stability of the surface layer, the negative electrode active material can be further protected well, the reductive decomposition of the electrolyte on a surface of the negative electrode active material can be inhibited, and the cycling performance, swelling suppression, rate performance, low-temperature performance, and the like of the electrochemical apparatus can be significantly improved.

In some embodiments, 5.0<d<12.0. When the average particle size of the silicon-carbon particles is within the above range, the structural stability of the silicon-carbon particles can be effectively improved, thereby improving the cycling performance of the electrochemical apparatus.

In some embodiments, 0.1≤c<1. When the thickness of the surface layer is within the above range, the cycling performance of the electrochemical apparatus can be further improved.

In some embodiments, an orientation index OI value of the negative electrode active material layer is f, and 4.0<f<13.0. The orientation index OI value of the negative electrode active material layer in this application being greater than 4.0 and less than 13.0 is more conducive to the migration of active ions, and allows the negative electrode active material layer to have better kinetic performance.

In some embodiments, a porosity of the negative electrode plate is g, and 15.0%<g<30.0%. The moderate porosity of the negative electrode plate is conducive to improving the cycling performance, swelling suppression, and the like of the electrochemical apparatus.

In some embodiments, a weight loss rate of the negative electrode plate at 800°C is h, and 10.0%<h<25.0%. When the weight loss rate is within the above range, the weight loss rate is relatively small, and the surface layer is not excessively thick, so that the negative electrode active material can be effectively protected, thereby improving the cycling performance and the like of the electrochemical apparatus.

In some embodiments, the surface layer of the silicon-carbon particle includes at least three elements selected from the group consisting of C, O, F, P, N, Si, and Li. This can further stabilize the surface of the silicon-carbon material and reduce side reactions between the silicon-carbon material and the electrolyte, thereby improving the rate performance and low-temperature performance of the electrochemical apparatus.

In some embodiments, based on a mass of the negative electrode active material, a mass percentage of the silicon element in the negative electrode active material is I, and 0.1%<I<15%. When the mass percentage of the silicon element is within the above range, the energy density and cycling stability of the electrochemical apparatus can be improved.

In some embodiments, based on the mass of the negative electrode active material, a mass percentage of the silicon-carbon particles is N, and 1%≤N≤20%. When the silicon-carbon particles are within the above range, the energy density and cycling stability of the electrochemical apparatus can be improved.

In some embodiments, the silicon-carbon particle includes metal ions, where the metal ions include at least one of iron ions, aluminum ions, copper ions, nickel ions, manganese ions, tin ions, or germanium ions. The metal ions are conducive to further inducing the uniform distribution of the silicon element.

In some embodiments, based on a mass of the silicon-carbon particle, a mass percentage of the metal ions is 0.005% to 0.05%. The mass percentage of the metal ions being within the above range is conducive to further inducing the uniform distribution of the silicon element.

According to a second aspect, this application proposes an electronic apparatus including the electrochemical apparatus according to any embodiment of the first aspect of this application.

According to a third aspect, this application proposes a preparation method of silicon-carbon particles. The preparation method includes: providing a porous carbon framework; providing a metal salt and placing the metal salt into pores of the porous carbon framework; providing a silicon-containing precursor on the porous carbon framework containing the metal salt, so that the silicon-containing precursor undergoes a chemical vapor reaction to form silicon-based particles, and the silicon-based particles deposit in the pores of the porous carbon framework to form silicon-carbon particles.

According to the preparation method of silicon-carbon particles in some embodiments of this application, the metal salt is provided on carbon-based particles, so that the metal salt is uniformly distributed in the pores of the porous carbon framework. The silicon-containing precursor is further provided on the carbon-based particles, and under the induction of the metal salt, the silicon-containing precursor undergoes the chemical vapor reaction and then uniformly deposits in the pores of the porous carbon framework in the form of silicon-based particles, thereby improving the distribution uniformity of the silicon element in the carbon-based particles. In addition, the distribution uniformity of the silicon element in different carbon-based particles can be improved, and the performance uniformity of the silicon-carbon particles can be improved. When the above silicon-carbon particles are applied to the negative electrode active material layer, the cycling performance, swelling suppression, rate performance, low-temperature performance, and the like of the electrochemical apparatus can be significantly improved.

In some embodiments, after the step of providing a silicon-containing precursor on the porous carbon framework containing the metal salt, so that the silicon-containing precursor undergoes a chemical vapor reaction to form silicon-based particles, and the silicon-based particles deposit in the pores of the porous carbon framework, the preparation method further includes: providing a carbon coating layer on at least a part of a surface of the porous carbon framework. The carbon coating layer can further alleviate the volume expansion of the silicon-based particles, further improving the cycling stability of the silicon-carbon particles, thereby improving the cycling performance and the like of the electrochemical apparatus.

In some embodiments, metal ions in the metal salt include at least one of iron ions, aluminum ions, copper ions, nickel ions, manganese ions, tin ions, or germanium ions. The metal ions are conducive to further inducing the uniform distribution of the silicon element.

In some embodiments, a pore volume of the porous carbon framework is greater than 0.4 g/cc. When the pore volume of the porous carbon framework is within the above range, the overall structural stability of the silicon-carbon particles can be improved.

In some embodiments, the porous carbon framework includes micropores with a pore size less than 2 nm, where based on the pore volume of the porous carbon framework, a volume percentage of a pore volume of the micropores is greater than 50%. A relatively large number of micropores are conducive to the deposition of nano silicon-based particles with a relatively small particle size in the pores. A relatively low volume expansion degree of the nano silicon-based particles is conducive to further improving the overall structural stability of the silicon-carbon particles.

According to a fourth aspect, this application proposes a silicon-carbon particle prepared by the preparation method according to any embodiment of the third aspect of this application.

### BRIEF DESCRIPTION OF DRAWINGS

The following describes features, advantages, and technical effects of some illustrative embodiments of this application with reference to the accompanying drawings.

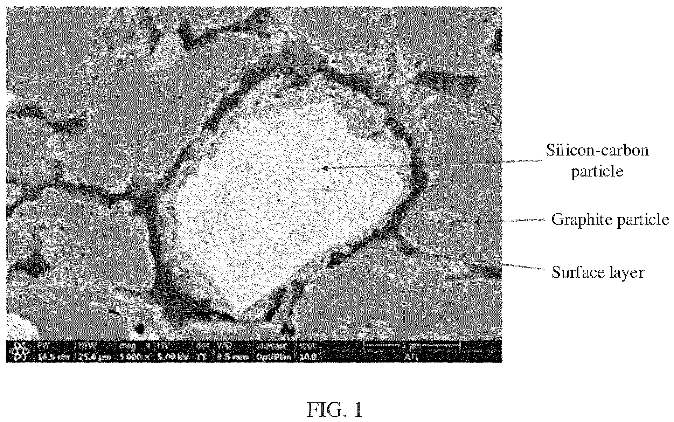

FIG. 1 shows a scanning electron microscope SEM image of a cross section of a negative electrode plate in a thickness direction according to any embodiment of this application.

### DESCRIPTION OF EMBODIMENTS

Some embodiments of this application are described in detail below.

In addition, quantities, ratios, and other numerical values are sometimes presented in the format of range in this specification. It should be understood that such format of range is used for convenience and simplicity and should be flexibly understood as including not only numerical values explicitly designated as falling within the range but also all individual numerical values or sub-ranges covered by the range as if each numerical value and sub-range are explicitly designated.

In specific embodiments and claims, a list of items connected by the terms "one or more of", "one or more pieces of", "one or more types of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements.

### Electrochemical apparatus

This application proposes an electrochemical apparatus. The electrochemical apparatus includes a negative electrode plate and an electrolyte. The negative electrode plate includes a negative electrode current collector and a negative electrode active material layer disposed on at least one surface of the negative electrode current collector and containing a negative electrode active material, the negative electrode active material including silicon-carbon particles and graphite particles. A surface of each silicon-carbon particle has a surface layer, a thickness of the surface layer is c µm, an average particle size of the silicon-carbon particles is d µm, and 0.42%<c/d<16.0%.

During charge, active ions in a positive electrode plate, such as lithium ions and sodium ions, migrate to a negative electrode plate through an electrolyte. During discharge, active ions in a negative electrode active material migrate to the positive electrode plate through the electrolyte. In the related art, during charge and discharge, with intercalation or deintercalation of active elements in the negative electrode active material, the negative electrode active material may undergo volume change. Especially when the negative electrode active material includes a silicon material containing the silicon element, the volume expansion of the negative electrode active material is more significant, which may even lead to structural damage or even pulverization of the negative electrode active material, thus severely deteriorating the cycling performance of the electrochemical apparatus. In addition, due to the significant volume change of the silicon material, the silicon material is exposed and is in direct contact with the electrolyte, resulting in side reactions. As cycling continues, the cycling performance of the electrochemical apparatus is further degraded.

However, in the electrochemical apparatus of this application, the negative electrode active material includes the silicon-carbon particles and the graphite particles. The silicon-carbon particles are formed by compounding the silicon element and the carbon element, which can alleviate the volume change of silicon during charge and discharge cycles. The silicon-carbon particles and the graphite particles are used in combination, further alleviating the volume change of the silicon-carbon particles during charge and discharge cycles. The surface layer of the silicon-carbon particle is formed during charge and discharge of the electrochemical apparatus.

The thickness c µm of the surface layer and the average particle size d µm of the silicon-carbon particles satisfy: 0.42%<c/d<16.0%. The thickness of the surface layer of each silicon-carbon particle is not excessively large. This indicates that during charge and discharge, the volume expansion of the silicon-carbon particles is relatively small, and the surface layer is relatively stable. In addition, this also means that the cycling stability of the silicon-carbon particles is good, the performance differences of the silicon-carbon particles are small, and the distribution of the silicon element between the silicon-carbon particles is relatively uniform. Furthermore, due to the compactness stability of the surface layer, the negative electrode active material can be further protected well, the reductive decomposition of the electrolyte on a surface of the negative electrode active material can be inhibited, and the cycling performance, swelling suppression, rate performance, low-temperature performance, and the like of the electrochemical apparatus can be significantly improved.

In this application, 0.42%<c/d<16.0%; and optionally, 1.0%≤c/d≤8.5%.

For example, c/d may be 0.43%, 0.45%, 0.5%, 0.55%, 0.6%, 0.65%, 0.7%, 0.8%, 0.9%, 1%, 1.2%, 1.5%, 2%, 2.5%, 3%, 3.5%, 4%, 4.5%, 4.8%, 4.9%, 5%, 5.3%, 5.5%, 5.9%, 6%, 6.5%, 6.7%, 6.9%, 7.0%, 7.5%, 7.6%, 8%, 8.2%, 8.5%, 9%, 9.5%, 10%, 10.5%, 11%, 11.5%, 12%, 12.5%, 13%, 13.5%, 14%, 14.5%, 15%, 15.5%, 15.8%, or 15.9%, or falls within a range defined by any two of these values.

According to some embodiments of this application, 5.0<d<12.0. When the average particle size of the silicon-carbon particles is within the above range, the volume change of the silicon-carbon particles during cycling of the electrochemical apparatus is relatively small, so that the structural stability of the silicon-carbon particles can be effectively improved, thereby improving the cycling performance of the electrochemical apparatus. For example, the average particle size of the silicon-carbon particles may be 5.1 µm, 5.2 µm, 5.5 µm, 5.8 µm, 6.0 µm, 6.2 µm, 6.5 µm, 6.8 µm, 7.0 µm, 7.2 µm, 7.5 µm, 7.8 µm, 8.0 µm, 8.2 µm, 8.5 µm, 8.8 µm, 9.0 µm, 9.2 µm, 9.5 µm, 9.8 µm, 10.0 µm, 10.5 µm, 11 µm, 11.5 µm, 11.8 µm, or 11.9 µm, or falls within a range defined by any two of these values.

In this application, during charge and discharge cycles of the electrochemical apparatus, the electrolyte can form a solid electrolyte interface film on a surface of the negative electrode active material layer, where the film is at least located on the surface of the silicon-carbon particle to form the surface layer. According to some embodiments of this application, 0.1≤c<1. When the thickness of the surface layer is within the above range, the thickness is moderate, providing excellent protection for the negative electrode active material, thereby improving the cycling stability of the negative electrode active material, and improving the cycling performance of the electrochemical apparatus. In addition, the surface layer is relatively stable, so that the cycling performance of the electrochemical apparatus can be further improved. For example, the thickness of the surface layer may be 0.1 µm, 0.2 µm, 0.3 µm, 0.4 µm, 0.5 µm, 0.6 µm, 0.7 µm, 0.8 µm, 0.9 µm, or 0.95 µm, or falls within a range defined by any two of these values.

According to some embodiments of this application, an orientation index OI value of the negative electrode active material layer is f, where 4.0<f<13.0; and optionally, 4.5≤f≤12.

The OI value of the negative electrode active material layer is a ratio of a peak area of the (004) plane to a peak area of the (110) plane, which is obtained by testing the negative electrode active material layer through an X-ray diffraction XRD method. When the OI value of the negative electrode active material layer is within the above range, the OI value is appropriate, facilitating the migration of active ions, and allowing the negative electrode active material layer to have excellent kinetic performance.

A more uniform distribution of the silicon element in the silicon-carbon particles leads to smaller density differences between the particles in a process of mixing the silicon-carbon particles and the graphite particles, facilitating the homogeneous mixing of the silicon-carbon particles and the graphite particles, thereby adjusting the OI value. In addition, due to the distribution uniformity of the silicon element, the thickness of the surface layer is moderate during cycling, and the thickness of the surface layer may have a certain effect on the OI value. Specifically, when the thickness of the surface layer is larger, the OI value of the negative electrode active material layer after cycling may be smaller. The reason may be that when the surface layer is thicker, the expansion degree of the corresponding silicon-carbon particle may be higher, the corresponding negative electrode active material layer is looser, and the OI value is reduced. This is conducive to improving the kinetic performance. Alternatively, the reason may be that as the thickness of the surface layer of the silicon-carbon particle increases, the lithium intercalation depth in the graphite particles increases, so that the kinetic performance is improved. However, as the thickness of the surface layer of the silicon-carbon particle further increases, the lithium intercalation depth in the graphite particles further increases. This may lead to aggravated damage of interlayer structures of the graphite particles, thus deteriorating the kinetic performance, cycling performance, swelling suppression, and the like.

Therefore, the orientation index OI value of the negative electrode active material layer in this application being greater than 4.0 and less than 13.0 is more conducive to the migration of active ions, and allows the negative electrode active material layer to have better kinetic performance. For example, the OI value of the negative electrode active material layer may be 4.1, 4.2, 4.5, 4.8, 5.0, 5.2, 5.5, 5.8, 6.0, 6.2, 6.5, 6.8, 7.0, 7.2, 7.5, 7.8, 8.0, 8.2, 8.5, 8.8, 9, 9.2, 9.5, 9.8, 10, 10.2, 10.5, 10.8, 11, 11.2, 11.5, 11.8, 12, 12.2, 12.5, or 12.8, or falls within a range defined by any two of these values.

According to some embodiments of this application, a porosity of the negative electrode plate is g, where 15.0%<g<30.0%; and optionally, 16%≤g≤29%. The moderate porosity of the negative electrode plate is conducive to improving the cycling performance, swelling suppression, and the like of the electrochemical apparatus. A more uniform distribution of the silicon element in the silicon-carbon particles leads to smaller density differences between the particles in a process of mixing the silicon-carbon particles and the graphite particles, facilitating the homogeneous mixing of the silicon-carbon particles and the graphite particles, thereby making the porosity of the negative electrode plate be moderate. In addition, after charge and discharge cycles, the thickness of the surface layer of the silicon-carbon particle still makes the porosity of the negative electrode plate be appropriate, which is conducive to further improving the cycling performance, swelling suppression, and the like of the electrochemical apparatus.

For example, the porosity of the negative electrode plate may be 15.1%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, or 29.5%, or falls within a range defined by any two of these values.

According to some embodiments of this application, a weight loss rate of the negative electrode plate at 800°C is h, where 10.0%<h<25.0%; and further optionally, 11%≤h≤23%.

Specifically, the negative electrode plate is subjected to a weight loss test under an inert atmosphere. A weight of the negative electrode plate before the weight loss test is W1, a weight of the negative electrode plate after a weight loss treatment at 800°C is W2, and the weight loss rate h is equal to (W2-W1)/W1. The surface layer of the silicon-carbon material can decompose and volatilize at 800°C. When the weight loss rate is within the above range, the weight loss rate is relatively small, and the thickness of the surface layer is not excessively large, so that the negative electrode active material can be effectively protected, thereby improving the cycling performance and the like of the electrochemical apparatus.

For example, the weight loss rate of the negative electrode plate is 10.5%, 11%, 12%, 13%, 14%, 15%, 16%, 17%, 18%, 19%, 20%, 21%, 22%, 23%, 24%, or 24.5%, or falls within a range defined by any two of these values.

According to some embodiments of this application, the surface layer of the silicon-carbon particle includes at least three elements selected from the group consisting of C, O, F, P, N, Si, and Li. The silicon-carbon material of this application can form a compact and stable surface layer after cycling of the electrochemical apparatus, which can further stabilize the surface of the silicon-carbon material and reduce side reactions between the silicon-carbon material and the electrolyte.

According to some embodiments of this application, based on a mass of the negative electrode active material, a mass percentage of the silicon element in the negative electrode active material is I, where 0.1%<I<29%; optionally, 0.1%<I<15%; and further optionally, 1%≤I≤13%. When the mass percentage of the silicon element is within the above range, the energy density and cycling stability of the electrochemical apparatus can be improved.

For example, the mass percentage of the silicon element may be 0.1%, 0.5%, 1.0%, 1.5%, 2.0%, 2.5%, 3%, 4%, 5%, 6%, 7%, 8%, 9%, 10%, 11%, 12%, 13%, 14%, 14.5%, 15%, 15.5%, 16%, 16.5%, 17%, 17.5%, 18%, 18.5%, 19%, 19.5%, 20%, 21%, 22%, 23%, 24%, 25%, 26%, 27%, 28%, or 28.5%, or falls within a range defined by any two of these values.

According to some embodiments of this application, based on the mass of the negative electrode active material, a mass percentage of the silicon-carbon particles is N, and 1%≤N≤20%. When the silicon-carbon particles are within the above range, the energy density and cycling stability of the electrochemical apparatus can be improved.

For example, the mass percentage of the silicon-carbon particles may be 1.0%, 1.5%, 2.0%, 2.5%, 3%, 4%, 5%, 6%, 7%, 8%, 9%, 10%, 11%, 12%, 13%, 14%, 14.5%, 15%, 16%, 17%, 18%, 19%, or 20%, or falls within a range defined by any two of these values.

According to some embodiments of this application, based on the mass of the negative electrode active material, a mass percentage of the graphite particles is M, and 80%≤M≤99%. When the graphite particles are within the above range, the cycling stability of the electrochemical apparatus can be improved.

For example, the mass percentage of the graphite particles may be 80%, 81%, 82%, 83%, 84%, 85%, 86%, 87%, 88%, 89%, 90%, 91%, 92%, 93%, 94%, 95%, 96%, 97%, 98%, or 99%, or falls within a range defined by any two of these values.

According to some embodiments of this application, the graphite particles may include at least one of artificial graphite or natural graphite.

According to some embodiments of this application, the silicon-carbon particle includes metal ions, where the metal ions include at least one of iron ions, aluminum ions, copper ions, nickel ions, manganese ions, tin ions, or germanium ions. The silicon-carbon particle includes the metal ions. The metal ions can effectively induce the uniform distribution of the silicon element in the silicon-carbon particles, improving the distribution uniformity of the silicon element in the silicon-carbon particles, thereby improving the performance uniformity of the silicon-carbon particles in the negative electrode active material layer, and further improving the cycling performance, swelling suppression, rate performance, low-temperature performance, and the like of the electrochemical apparatus.

According to some embodiments of this application, based on a mass of the silicon-carbon particle, a mass percentage of the metal ions is 0.005% to 0.05%, optionally 0.020% to 0.04%. The mass percentage of the metal ions being within the above range is conducive to further inducing the uniform distribution of the silicon element.

For example, based on the mass of the silicon-carbon particle, the mass percentage of the metal ions may be 0.005%, 0.006%, 0.007%, 0.008%, 0.009%, 0.01%, 0.015%, 0.020%, 0.021%, 0.024%, 0.025%, 0.028%, 0.030%, 0.035%, 0.040%, 0.045%, or 0.05%, or falls within a range defined by any two of these values.

According to some embodiments of this application, the silicon-carbon particle may include a porous carbon framework, silicon-based particles, and a metal salt containing metal ions. The silicon-based particles are disposed in pores of the porous carbon framework. The metal salt is located between the silicon-based particles and the walls of the pores.

The metal salt is placed into the pores of the porous carbon framework in advance, so that the metal salt can induce the uniform distribution of the silicon-based particles in the pores of the porous carbon framework, thereby making the performance of the silicon-carbon particle uniform. In addition, the porous carbon framework can limit the silicon-based particles and effectively alleviate the volume expansion of the silicon-based particles, improving the cycling stability of the silicon-carbon particles, thereby improving the cycling performance of the electrochemical apparatus.

According to some embodiments of this application, based on a mass of the porous carbon framework, a mass percentage of the metal ions is 0.01% to 0.1%, optionally 0.015% to 0.095%. The mass percentage of the metal ions being within the above range is conducive to further inducing the uniform distribution of the silicon element.

For example, based on the mass of the porous carbon framework, the mass percentage of the metal ions may be 0.01%, 0.015%, 0.02%, 0.03%, 0.04%, 0.05%, 0.06%, 0.07%, 0.08%, 0.09%, 0.095%, or 0.1%, or falls within a range defined by any two of these values.

According to some embodiments of this application, the metal salt includes at least one of sulfate, carbonate, hydrochloride, or nitrate.

For example, the metal salt containing iron ions may include at least one of iron sulfate, iron carbonate, iron chloride, or iron nitrate.

For example, the metal salt containing aluminum ions may include at least one of aluminum sulfate, aluminum carbonate, aluminum chloride, or aluminum nitrate.

For example, the metal salt containing copper ions may include at least one of copper sulfate, copper carbonate, copper chloride, or copper nitrate.

For example, the metal salt containing nickel ions may include at least one of nickel sulfate, nickel carbonate, nickel chloride, or nickel nitrate.

For example, the metal salt containing manganese ions may include at least one of manganese sulfate, manganese carbonate, manganese chloride, or manganese nitrate.

For example, the metal salt containing tin ions may include at least one of tin sulfate, tin carbonate, tin chloride, or tin nitrate.

For example, the metal salt containing germanium ions may include at least one of germanium sulfate, germanium carbonate, germanium chloride, or germanium nitrate.

According to some embodiments of this application, the silicon-carbon particle further includes a carbon coating layer, where the carbon coating layer is applied on least part of a surface of the porous carbon framework.

The carbon coating layer can further alleviate the volume expansion of the silicon-based particles, further improving the cycling stability of the silicon-carbon particles, thereby improving the cycling performance and the like of the electrochemical apparatus.

This application further provides a preparation method of silicon-carbon particles.

The preparation method includes the following steps.

Step S100: Provide a porous carbon framework.

Step S200: Provide a metal salt and place the metal salt into pores of the porous carbon framework.

Step S300: Provide a silicon-containing precursor on the porous carbon framework containing the metal salt, so that the silicon-containing precursor undergoes a chemical vapor reaction to form silicon-based particles, and the silicon-based particles deposit in the pores of the porous carbon framework to form silicon-carbon particles.

When the porous carbon framework, as a carbon material, is applied to a negative electrode active material, the porous carbon framework has high structural stability during charge and discharge cycles. However, a specific capacity of the porous carbon framework is relatively low. When the silicon-based particles are used as the negative electrode active material, the silicon-based particles have relatively high specific capacity. However, the silicon-based particles undergo significant volume change and structural instability during charge and discharge cycles, and are prone to particle pulverization. In the related art, to improve the performance of the negative electrode active material, carbon-based particles and silicon-based particles are typically combined for use. The carbon-based particles and the silicon-based particles are combined into various structures, such as a core-shell structure and a porous structure. For example, when the porous structure is used, the silicon-based particles are disposed in porous carbon particles. The porous carbon particles can alleviate the volume expansion of the silicon-based particles to a certain extent and facilitate the capacity utilization of the silicon-based particles, thereby improving the energy density and cycling performance of the electrochemical apparatus.

However, it has been found through further research that when silicon-based particles are disposed in porous carbon particles, due to issues such as the fluidity and reactivity of the silicon-containing precursor, there are differences in the amounts of silicon depositing between particles during the vapor deposition of the silicon-containing precursor. Some particles exhibit over-deposition, leading to a significant reduction in reserved pores in the silicon-carbon particles, and reducing the space reserved for the expansion of silicon. Some particles exhibit under-deposition. This under-deposition condition is not conducive to exerting the high energy density of silicon, and the excessive reserved pores are not conducive to the transmission and diffusion of electrons and active ions in a bulk phase during charge and discharge, thus affecting the accumulation and reaction of the electrons and active ions, and significantly deteriorating the rate performance and low-temperature performance of the electrochemical apparatus. Due to deposition differences in different regions in a same particle, some regions of the carbon-based particles may exhibit over-deposition, while other regions exhibit under-deposition, thus further deteriorating the cycling performance, expansion suppression, rate performance, low-temperature performance, and the like of the electrochemical apparatus.

However, according to the preparation method in some embodiments of this application, the metal salt is provided on carbon-based particles, so that the metal salt is uniformly distributed in the pores of the porous carbon framework. The silicon-containing precursor is further provided on the carbon-based particles, and under the induction of the metal salt, the silicon-containing precursor undergoes the chemical vapor reaction and then uniformly deposits in the pores of the porous carbon framework in the form of silicon-based particles, thereby improving the distribution uniformity of the silicon element in the carbon-based particles. In addition, the distribution uniformity of the silicon element in different carbon-based particles can be improved, and the performance uniformity of the silicon-carbon particles can be improved. When the above silicon-carbon particles are applied to the negative electrode active material layer, the cycling performance, swelling suppression, rate performance, low-temperature performance, and the like of the electrochemical apparatus can be significantly improved.

### [Step S100]

Provide a porous carbon framework.

According to some embodiments of this application, the porous carbon framework includes pores. The pores include at least one of macropores, mesopores, or micropores. The macropores refer to pores with a pore size greater than 50 nm. The mesopores refer to pores with a pore size of 2 nm to 50 nm. The micropores refer to pores with a pore size less than 2 nm.

According to some embodiments of this application, a pore volume of the porous carbon framework is greater than 0.4 g/cc, optionally greater than or equal to 0.7 g/cc. For example, the pore volume of the porous carbon framework may be 0.4 g/cc, 0.5 g/cc, 0.6 g/cc, 0.7 g/cc, 0.8 g/cc, 0.85 g/cc, or 0.9 g/cc, or falls within a range defined by any two of these values.

The pore volume of the porous carbon framework being within the above range allows a relatively large number of silicon-based particles to deposit in the pores. In addition, some space can be reserved in the pores to provide expansion space for the silicon-based particles, thereby improving the overall structural stability of the silicon-carbon particles.

According to some embodiments of this application, the porous carbon framework includes micropores with a pore size less than 2 nm, and based on the pore volume of the porous carbon framework, a volume percentage of the micropores is greater than 50%, optionally greater than 50% and less than or equal to 95%. A relatively large number of micropores are conducive to the deposition of nano silicon-based particles with a relatively small particle size in the pores. A relatively low volume expansion degree of the nano silicon-based particles is conducive to further improving the overall structural stability of the silicon-carbon particles.

### [Step S200]

Provide a metal salt on carbon-based particles, so that the metal salt is placed into the pores of the porous carbon framework.

The metal salt may include metal ions, where the metal ions include at least one of iron ions, aluminum ions, copper ions, nickel ions, manganese ions, tin ions, or germanium ions. The above metal salt can effectively induce the uniform distribution of the silicon-based particles, improving the distribution uniformity of the silicon element in the silicon-carbon particles.

According to some embodiments of this application, the metal salt includes at least one of sulfate, carbonate, hydrochloride, or nitrate.

For example, the metal salt containing iron ions may include at least one of iron sulfate, iron carbonate, iron chloride, or iron nitrate.

For example, the metal salt containing aluminum ions may include at least one of aluminum sulfate, aluminum carbonate, aluminum chloride, or aluminum nitrate.

For example, the metal salt containing copper ions may include at least one of copper sulfate, copper carbonate, copper chloride, or copper nitrate.

For example, the metal salt containing nickel ions may include at least one of nickel sulfate, nickel carbonate, nickel chloride, or nickel nitrate.

For example, the metal salt containing manganese ions may include at least one of manganese sulfate, manganese carbonate, manganese chloride, or manganese nitrate.

For example, the metal salt containing tin ions may include at least one of tin sulfate, tin carbonate, tin chloride, or tin nitrate.

For example, the metal salt containing germanium ions may include at least one of germanium sulfate, germanium carbonate, germanium chloride, or germanium nitrate.

According to some embodiments of this application, the metal ions can be uniformly dispersed in the pores of the porous carbon framework in a manner of rotary evaporation. In addition, distribution degrees of the metal ions in different porous carbon framework particles are basically the same. This improves the distribution uniformity of the metal ions in the porous carbon frameworks.

The metal salt is subjected to rotary evaporation in a form of a metal salt solution, where a solvent in the metal salt solution may be water, a solute is the metal salt, and a mass percentage of the metal salt is 0.5% to 2.0%, for example, 0.5%, 0.8%, 1%, 1.2%, 1.5%, or 2%, or falls within a range defined by any two of these values. The metal salt solution is provided on the carbon-based particles through a rotary evaporation process, so that the solvent in the metal salt solution volatilizes, and the solute metal salt in the metal salt solution is distributed in the pores of the porous carbon framework of the carbon-based particles.

Optionally, based on a mass of the porous carbon framework, a mass percentage of the metal ions is 0.01% to 0.1%. The mass percentage of the metal ions being within the above range is conducive to further inducing the uniform distribution of the silicon element.

For example, based on the mass of the porous carbon framework, the mass percentage of the metal ions may be 0.01%, 0.02%, 0.03%, 0.04%, 0.05%, 0.06%, 0.07%, 0.08%, 0.09%, or 0.1%, or falls within a range defined by any two of these values.

Optionally, the metal salt solution is added into a rotary evaporation flask. A rotation speed of the rotary evaporation flask is 30 rpm/min to 60 rpm/min, for example, 30 rpm/min, 35 rpm/min, 40 rpm/min, 45 rpm/min, 50 rpm/min, 55 rpm/min, or 60 rpm/min, or falls within a range defined by any two of these values.

Optionally, a rotary evaporation temperature is 100°C to 150°C, for example, 100°C, 110°C, 120°C, 130°C, 140°C, or 150°C, or falls within a range defined by any two of these values.

Optionally, a rotary evaporation time may be 2 h to 10 h, for example, 2 h, 3 h, 4 h, 5 h, 6 h, 7 h, 8 h, 9 h, or 10 h, or falls within a range defined by any two of these values.

### [Step S300]

Provide a silicon-containing precursor on the porous carbon framework containing the metal salt, so that the silicon-containing precursor undergoes a chemical vapor reaction to form silicon-based particles, and the silicon-based particles deposit in the pores of the porous carbon framework to form silicon-carbon particles.

According to some embodiments of this application, the silicon-containing precursor includes gases such as silane.

For example, the porous carbon framework is placed into a deposition reactor such as a fluidized bed reactor. Then, a silane gas with a volume percentage of 1% to 90% is introduced at a temperature of 450°C to 900°C, with the remaining being an inert gas. The silane deposits for 1 h to 48 h under this condition.

According to some embodiments of this application, step S300 may include the following steps.

Step S310: Provide the silicon-containing precursor on the porous carbon framework containing the metal salt, so that the silicon-containing precursor undergoes the chemical vapor reaction to form the silicon-based particles, and the silicon-based particles deposit in the pores of the porous carbon framework.

Step S320: Provide a carbon coating layer on at least a part of a surface of the porous carbon framework to form a silicon-carbon particle.

After the deposition reaction is completed, a pure inert gas is introduced for 30 min. Then, a carbon-containing precursor such as an acetylene gas with a concentration of 1% to 100% is introduced. After pyrolyzation at 400°C to 800°C for 1 h to 48 h, the carbon-containing precursor is pyrolyzed into a carbon coating layer which covers the surface of the porous carbon framework to obtain the silicon-carbon particle.

According to some embodiments of this application, the inert gas may include at least one of a nitrogen gas, an argon gas, or a helium gas.

This application further provides a silicon-carbon particle which may be prepared by the preparation method according to any one of the foregoing embodiments.

According to some embodiments of this application, the structure of the negative electrode plate is a structure well known in the art for a negative electrode plate for electrochemical apparatuses.

The negative electrode current collector includes two surfaces opposite each other along its thickness direction, where at least one of the two surfaces is provided with a negative electrode active material layer. Certainly, the two surfaces may be each provided with a negative electrode active material layer.

According to some embodiments of this application, the negative electrode current collector is made of metal, for example, but not limited to, a copper foil, a nickel foil, a stainless steel foil, a titanium foil, nickel foam, copper foam, a polymer substrate coated with a conductive metal, or a combination thereof.

According to some embodiments of this application, in addition to the above silicon-carbon particles and graphite particles, the negative electrode active material may further include various conventional substances well known in the art and capable of being used as negative electrode active materials for electrochemical apparatuses or capable of implementing reversible intercalation and deintercalation of active ions or reversible doping and dedoping of active ions. The negative electrode active material contains at least one of lithium metal, a lithium metal alloy, a carbon material, a material capable of implementing doping/dedoping of lithium, or a transition metal oxide. According to some embodiments of this application, the carbon material can be selected from various carbon materials well known in the art and capable of being used as carbon-based negative electrode active materials for electrochemical apparatuses. According to some embodiments of this application, the carbon material contains at least one of soft carbon, hard carbon, pyrolytic carbon, mesophase pitch-based carbon fiber, mesocarbon microbeads, mesophase pitch, or high-temperature calcined carbon.

According to some embodiments of this application, the high-temperature calcined carbon is coke derived from petroleum or coal tar pitch. According to some embodiments of this application, amorphous carbon contains at least one of soft carbon, hard carbon, a mesophase pitch carbonized product, or calcined coke. According to some embodiments of this application, the negative electrode active material contains a transition metal oxide. According to some embodiments of this application, the transition metal oxide contains at least one of vanadium oxide or lithium vanadium oxide. According to some embodiments of this application, the negative electrode active material includes at least one of Si, SiOₓ(0<x<2), an Si/C composite, an Si-Q alloy, Sn, SnOz, an Sn-C composite, or an Sn-R alloy, where Q is at least one selected from alkali metals, alkaline earth metals, elements of groups 13 to 16, transition elements, and rare earth elements, and Q is not Si; and R is at least one selected from alkali metals, alkaline earth metals, elements of groups 13 to 16, transition elements, and rare earth elements, and R is not Sn. According to some embodiments of this application, Q and R each contain at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po.

According to some embodiments of this application, the negative electrode active material layer further contains a negative electrode binder and a negative electrode conductive agent. According to some embodiments of this application, the negative electrode binder contains at least one of a polyvinylidene fluoride-hexafluoropropylene copolymer (PVDF-co-HFP), poly(vinylidene fluoride), polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic (ester) modified styrene-butadiene rubber, epoxy resin, or nylon. According to some embodiments of this application, the negative electrode conductive agent is used to provide conductivity to an electrode, and may include any conductive material as long as no chemical change is caused. According to some embodiments of this application, the negative electrode conductive agent contains any one or a mixture of a carbon-based material, a metal-based material, or a conductive polymer. According to some embodiments of this application, the carbon-based material contains at least one of carbon black, acetylene black, Ketjen black, or carbon fiber. According to some embodiments of this application, the metal-based material contains at least one of metal powder or metal fiber of copper, nickel, aluminum, silver, or the like. According to some embodiments of this application, the conductive polymer contains a polyphenylene derivative.

According to some embodiments of this application, a preparation method of the negative electrode plate is a preparation method well known in the art for a negative electrode plate that can be used for electrochemical apparatuses. According to some embodiments of this application, during preparation of a negative electrode slurry, a solvent is typically added. The negative electrode active material is added with a binder, and then added with a conductive material and a thickener based on needs. Then, the resulting mixture is dissolved or dispersed in the solvent to form the negative electrode slurry. The solvent volatilizes to be removed during drying. The solvent is a solvent well known in the art and capable of being used as a negative electrode active material layer. The solvent is, for example, but not limited to, water. The thickener is a thickener well known in the art and capable of being used as a negative electrode active material layer. The thickener is, for example, but not limited to, sodium carboxymethyl cellulose.

A mixing ratio of the negative electrode active material, binder, conductive agent, and the like in the negative electrode active material layer is not particularly limited in this application, and the mixing ratio can be controlled according to the desired performance of the electrochemical apparatus.

The electrochemical apparatus of this application further includes a positive electrode plate, and the positive electrode plate is a positive electrode plate well known in the art for electrochemical apparatuses. According to some embodiments of this application, the positive electrode plate includes a positive electrode current collector and a positive electrode active material layer. The positive electrode active material layer is provided on a surface of the positive electrode current collector. The positive electrode active material layer contains a positive electrode active material.

According to some embodiments of this application, the structure of the positive electrode plate is a structure well known in the art for a positive electrode plate for electrochemical apparatuses.

The positive electrode current collector includes two surfaces opposite each other in its thickness direction, where at least one of the two surfaces is provided with a positive electrode active material layer. Certainly, the two surfaces may be each provided with a positive electrode active material layer.

According to some embodiments of this application, the positive electrode current collector may be a metal foil or a composite current collector. For example, an aluminum foil can be used. The composite current collector may be formed by forming a metal material (copper, copper alloy, nickel, nickel alloy, titanium, titanium alloy, silver, silver alloy, or the like) on a polymer matrix.

According to some embodiments of this application, the positive electrode active material may include at least one of lithium cobalt oxide, lithium nickel manganese cobaltate, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate. In some embodiments, the binder may include various binder polymers, for example, at least one of polyvinylidene fluoride, polytetrafluoroethylene, polyolefins, sodium carboxymethyl cellulose, lithium carboxymethyl cellulose, modified polyvinylidene fluoride, modified SBR rubber, or polyurethane. In some embodiments, a polyolefin binder includes at least one of polyethylene, polypropylene, polyolefin ester, polyvinyl alcohol, or polyacrylic acid.

According to some embodiments of this application, the positive electrode active material layer further contains a positive electrode binder. According to some embodiments of this application, the positive electrode binder contains at least one of a polyvinylidene fluoride-hexafluoropropylene copolymer (PVDF-co-HFP), poly(vinylidene fluoride), polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic (ester) modified styrene-butadiene rubber, epoxy resin, or nylon.

In some embodiments, the positive electrode active material layer further contains a positive electrode conductive agent. Any conductive material can be used as the positive electrode conductive agent as long as no chemical change is caused. Examples of the positive electrode conductive agent include: a carbon-based material such as natural graphite, artificial graphite, carbon black, acetylene black, Ketjen black, or carbon fiber; a metal-based material such as metal powder or metal fiber of copper, nickel, aluminum, or silver; a conductive polymer such as a polyphenylene derivative; or a mixture thereof.

According to some embodiments of this application, a preparation method of the positive electrode plate is a preparation method well known in the art for a positive electrode plate for electrochemical apparatuses. According to some embodiments of this application, during preparation of a positive electrode slurry, a solvent is typically added. The positive electrode active material is added with a binder and then added with a conductive material based on needs. Then, the resulting mixture is dissolved or dispersed in the solvent to form the positive electrode slurry. The solvent volatilizes to be removed during drying. The solvent is a solvent well known in the art capable of being used as a positive electrode active material layer. The solvent is, for example, but not limited to, N-methylpyrrolidone.

A mixing ratio of the positive electrode active material, binder, conductive agent, and the like in the positive electrode active material layer is not particularly limited in this application, and the mixing ratio can be controlled according to the desired performance of the electrochemical apparatus.

The electrochemical apparatus of this application further includes a separator, and the separator is a separator well known in the art for electrochemical apparatuses, for example, but not limited to, a polyolefin microporous film. According to some embodiments of this application, the separator contains at least one of polyethylene (PE), an ethylene-propylene copolymer, polypropylene (PP), an ethylene-butene copolymer, an ethylene-hexene copolymer, or an ethylene-methyl methacrylate copolymer.

According to some embodiments of this application, the separator is a single-layer separator or a multi-layer separator.

According to some embodiments of this application, the separator is coated with a coating. According to some embodiments of this application, the coating contains at least one of an organic coating and an inorganic coating. The organic coating is at least one selected from polyvinylidene fluoride, a vinylidene fluoride-hexafluoropropylene copolymer, polyacrylonitrile, polyimide, an acrylonitrile-butadiene copolymer, an acrylonitrile-styrene-butadiene copolymer, polymethyl methacrylate, polymethyl acrylate, polyethyl acrylate, an acrylic acid-styrene copolymer, polydimethylsiloxane, sodium polyacrylate, and sodium carboxymethyl cellulose. The inorganic coating includes inorganic particles and a binder, where the inorganic particle is at least one selected from aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is at least one selected from polyvinylidene fluoride, a vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, and polyhexafluoropropylene.

The form and thickness of the separator are not particularly limited in this application. A preparation method of the separator is a preparation method well known in the art for a separator for electrochemical apparatuses.

The electrochemical apparatus of this application further includes an electrolyte, and the electrolyte that can be used in this application may be an electrolyte known in the prior art.

In some embodiments, the electrolyte includes an organic solvent, a lithium salt, and an optional additive. The organic solvent of the electrolyte according to this application may be any organic solvent known in the prior art and capable of being used as a solvent for electrolytes.

An electrolytic salt used in the electrolyte according to this application is not limited, and may be any electrolytic salt known in the prior art. The additive of the electrolyte according to this application may be any additive known in the prior art and capable of being used as an additive for electrolytes.

In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, including at least one of 1,3-dioxolane (DOL) or dimethoxyethane (DME).

In some embodiments, the lithium salt includes at least one of an organic lithium salt or an inorganic lithium salt.

In some embodiments, the lithium salt includes but is not limited to at least one of lithium hexafluorophosphate, lithium tetrafluoroborate, lithium difluorophosphate, lithium bis(trifluoromethanesulfonyl)imide, lithium bis(fluorosulfonyl)imide, lithium bis(oxalato)borate, or lithium difluoro(oxalato)borate.

In some embodiments, the electrochemical apparatus of this application includes but is not limited to all types of primary batteries, secondary batteries, or capacitors. In some embodiments, the electrochemical apparatus is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

### Electronic apparatus

This application further provides an electronic apparatus based on the same inventive concept.

The electronic apparatus of this application is any electronic apparatus, for example, but is not limited to, a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc, a transceiver, an electronic notebook, a calculator, a storage card, a portable recorder, a radio, a backup power supply, a motor, an automobile, a motorcycle, a motor bicycle, a bicycle, a lighting appliance, a toy, a game console, a clock, an electric tool, a flash lamp, a camera, a large household storage battery, or a lithium-ion capacitor. It should be noted that the electrochemical apparatus of this application is applicable to not only the electronic apparatuses listed above but also energy storage power stations, marine transport tools, and airborne transport tools. Airborne transport apparatuses include endoatmospheric airborne transport apparatuses and extra-atmospheric airborne transport apparatuses.

According to some embodiments of this application, the electronic apparatus includes the foregoing electrochemical apparatus of this application.

Lithium-ion batteries are used as examples to further illustrate the technical solutions of this application with reference to examples and comparative examples, but are not limited thereto. Persons skilled in the art should understand that the preparation methods described in this application are merely illustrative embodiments, and any modifications or equivalent replacements made to the technical solutions of this application without departing from the scope of the technical solutions of this application should fall within the protection scope of this application.

In the following examples and comparative examples, all reagents, materials, and instruments used are commercially available or synthesized unless otherwise specified.

### Examples

The following describes performance evaluation performed based on examples and comparative examples of lithium-ion batteries in this application.

### Preparation of silicon-carbon particles in examples and comparative examples

A porous carbon framework was provided, where a pore volume of the porous carbon framework was greater than 0.4 g/cc, and a volume percentage of micropores in the porous carbon framework was greater than 50%.

A metal salt solution (where a mass percentage of a metal salt was 0.5% to 2.0%) and the porous carbon framework were added into a rotary evaporation flask, with a rotation speed of 30 rpm/min to 60 rpm/min, a temperature of 100°C to 150°C, and a reaction time of 2 h to 10 h, where based on a mass of the porous carbon framework, a mass percentage of metal ions was 0.01% to 0.1%.

The porous carbon framework was placed into a fluidized bed reactor. Then, a silane gas with a volume percentage of 1% to 90% was introduced at a temperature of 630°C, with the remaining being an inert gas that was a helium gas. The silane deposited for 1 h to 48 h under this condition.

After the deposition reaction was completed, a pure inert gas that was the helium gas was introduced for 30 min. Then, an acetylene gas with a concentration of 1% to 100% was introduced. Then, deposition was performed at 400°C to 800°C for 1 h to 48h, and silicon-carbon particles were obtained.

The preparation parameters of examples and comparative examples are shown in Table 1.

**Table 1**

| Item | Metal salt | | Porous carbon framework | | Silane | |
|---|---|---|---|---|---|---|
| | Material | Mass percentage of metal ions based on mass of porous carbon framework a (%) | Pore volume (g/cc) | Volume percentage of micropores (%) | Volume percentage (%) | Introduction time (h) |
| Example 1 | Nickel sulfate | 0.020 | 0.70 | 90 | 47 | 15 |
| Example 2 | Nickel sulfate | 0.050 | 0.70 | 90 | 47 | 15 |
| Example 3 | Nickel sulfate | 0.070 | 0.70 | 90 | 47 | 15 |
| Example 4 | Nickel sulfate | 0.080 | 0.70 | 90 | 47 | 15 |
| Example 5 | Nickel sulfate | 0.050 | 0.70 | 90 | 90 | 15 |
| Example 6 | Nickel sulfate | 0.050 | 0.70 | 90 | 75 | 14 |
| Example 7 | Nickel sulfate | 0.050 | 0.70 | 90 | 60 | 10 |
| Example 8 | Copper sulfate | 0.050 | 0.70 | 90 | 47 | 15 |
| Example 9 | Iron chloride | 0.050 | 0.70 | 90 | 47 | 15 |
| Example 10 | Zinc nitrate | 0.050 | 0.70 | 90 | 47 | 15 |
| Example 11 | Nickel sulfate | 0.030 | 0.70 | 90 | 47 | 15 |
| Example 12 | Nickel sulfate | 0.070 | 0.70 | 90 | 47 | 15 |
| Example 13 | Nickel sulfate | 0.080 | 0.70 | 90 | 47 | 15 |
| Example 14 | Nickel sulfate | 0.090 | 0.70 | 90 | 47 | 15 |
| Example 15 | Nickel sulfate | 0.040 | 0.70 | 90 | 47 | 15 |
| Example 16 | Nickel sulfate | 0.035 | 0.70 | 90 | 47 | 15 |
| Example 17 | Nickel sulfate | 0.025 | 0.70 | 90 | 47 | 15 |
| Example 18 | Nickel sulfate | 0.015 | 0.70 | 90 | 47 | 15 |
| Example 19 | Nickel sulfate | 0.060 | 0.70 | 90 | 47 | 15 |
| Example 20 | Nickel sulfate | 0.075 | 0.70 | 90 | 47 | 15 |
| Example 21 | Nickel sulfate | 0.080 | 0.70 | 90 | 47 | 15 |
| Example 22 | Nickel sulfate | 0.095 | 0.70 | 90 | 47 | 15 |
| Example 23 | Nickel sulfate | 0.050 | 0.70 | 90 | 30 | 12 |
| Example 24 | Nickel sulfate | 0.050 | 0.70 | 90 | 47 | 15 |
| Example 25 | Nickel sulfate | 0.050 | 0.80 | 90 | 70 | 15 |
| Example 26 | Nickel sulfate | 0.050 | 0.85 | 90 | 72 | 18 |
| Comparative example 1 | Nickel sulfate | 0.002 | 0.80 | 95 | 47 | 15 |
| Comparative example 2 | Nickel sulfate | 1.000 | 0.80 | 90 | 47 | 15 |
| Comparative example 3 | Nickel sulfate | 0.003 | 0.60 | 90 | 47 | 15 |
| Comparative example 4 | Nickel sulfate | 1.500 | 0.80 | 90 | 47 | 15 |
| Comparative example 5 | No addition | / | 0.70 | 90 | 47 | 15 |
| Comparative example 6 | Nickel sulfate | 0.800 | 0.65 | 95 | 47 | 15 |

### Preparation of lithium-ion batteries in examples and comparative examples

### (1) Preparation of positive electrode plate

Lithium cobalt oxide (LiCoO₂), a conductive material (Super-P), and polyvinylidene fluoride (PVDF) were stirred and mixed well at a mass ratio of 96%:2%:2% in an appropriate amount of a solvent N-methylpyrrolidone (NMP) to form a uniform positive electrode slurry, and the positive electrode slurry was applied on a positive electrode current collector aluminum foil, followed by drying and cold pressing, to obtain a positive electrode active material layer. The positive electrode active material layer and the positive electrode current collector aluminum foil formed a positive electrode plate.

### (2) Preparation of negative electrode plate

A negative electrode active material artificial graphite, negative electrode active materials that were the silicon-carbon particles prepared in the foregoing examples and comparative examples, conductive carbon black, and a binder polyacrylic acid PAA were mixed at a weight ratio of 70%:15%:5%:10%. Then, an appropriate amount of water was added, and kneading was performed with a solid content of approximately 55wt% to 70wt%. An appropriate amount of water was added, and a viscosity of the resulting slurry was adjusted to approximately 4000 Pa·s to 6000 Pa·s to obtain a negative electrode slurry. The negative electrode slurry was applied on a negative electrode current collector copper foil, followed by drying and cold pressing, to obtain a negative electrode plate.

### (3) Preparation of electrolyte

In an argon atmosphere glove box with a water content less than 10 ppm, ethylene carbonate (EC), propylene carbonate (PC), and diethyl carbonate (DEC) were mixed well at a mass ratio of 1:1:1 to form a solvent. Then, a lithium salt LiPF₆ was dissolved in the solvent, and 12.5wt% fluoroethylene carbonate (FEC) was added, to obtain an electrolyte, where a concentration of the lithium salt LiPF₆ was approximately 1.15 mol/L.

### (4) Preparation of separator

A polyethylene (PE) porous polymer film was used as a separator.

### (5) Preparation of lithium-ion battery

The positive electrode plate, separator, and negative electrode plate were stacked in sequence, so that the separator was located between the positive electrode plate and the negative electrode plate for separation. Then, tab welding and winding were performed to obtain an electrode assembly. The electrode assembly was placed into an outer package. Then, the prepared electrolyte was injected, and processes such as vacuum packaging, standing, formation, shaping, and capacity testing were performed to obtain a lithium-ion battery.

The relevant parameters of the lithium-ion batteries in examples and comparative examples are shown in Tables 2 to 6.

### Test methods:

### I. Test of parameters of negative electrode plate

The electrochemical apparatus (lithium-ion battery) prepared in each of the above examples and comparative examples was constant-current discharged to a 0% state of charge (SOC). Then, the electrochemical apparatus was disassembled to obtain a negative electrode plate for subsequent test and analysis. Specifically, the lithium-ion battery in a fully discharged state was disassembled to obtain a negative electrode plate. Then, the negative electrode plate was soaked in dimethyl carbonate (DMC) for 20 min and then sequentially washed with DMC and acetone. Then, the negative electrode plate was placed into an oven and baked at 80°C for 12 h to obtain a treated negative electrode plate.

A negative electrode active material layer on the negative electrode plate was scraped off with a scraper. Powder of the scraped negative electrode active material layer was heated in a tube furnace at 400°C for 4 h under argon protection to obtain a negative electrode active material.

### 1. Test of surface layer thickness and average particle size of silicon-carbon particles

The relevant parameters of the silicon-carbon particles in the electrochemical apparatus in the fully discharged state were tested. Specifically, the lithium-ion battery in each of examples and comparative examples was disassembled in the foregoing method to obtain a negative electrode plate. The negative electrode plate was cut into a size of 0.5 cm×1 cm. The negative electrode plate was pasted onto a silicon wafer carrier with a size of 1 cm×1.5 cm using a conductive adhesive. A cross section of the negative electrode plate in a thickness direction was treated for subsequent observation through argon ion polishing (parameters were as follows: an acceleration voltage was 8 KV, and a treatment time was 4 h).

A scanning electron microscope SEM and a ZEISS SEM (Sigma-02-33) (0.1-30 KV) device were used in combination to observe the cross section of the treated negative electrode plate in the thickness direction at a magnification of 100 K in a backscatter mode to obtain an SEM image.

FIG. 1 shows a scanning electron microscope SEM image of a cross section of a negative electrode plate in a thickness direction according to any embodiment of this application, which shows silicon-carbon particles and graphite particles and also shows a surface layer on a silicon-carbon particle. In the SEM image, all the silicon-carbon particles in the field of view were observed. The longest distance between any two points on a silicon-carbon particle was taken as a particle size of the silicon-carbon particle. An average particle size of the silicon-carbon particles was obtained through calculation. In the SEM image, a silicon-carbon particle was randomly selected. Thicknesses of any 100 points at the edge of the surface layer of the silicon-carbon particle were measured, and an average of the measured thicknesses was calculated to obtain the thickness of the surface layer of the silicon-carbon particle.

### 2. Test of mass percentage of silicon element in negative electrode active material

0.1000 g of negative electrode active material powder was taken as a sample and placed into a nickel crucible. Then, 1.5 g of KOH was added into the nickel crucible, and the crucible was covered with a crucible cover and placed into a muffle furnace. The muffle furnace was slowly heated to 400°C. A heating program was performed by heating from room temperature to 300°C in 2 h and then heating from 300°C to 400°C in 2 h. Then, a cooling digestion program was started. After the cooling digestion program ended, the nickel crucible was taken out.

After cooled to approximately 100°C, the calcined nickel crucible was taken out and placed into an F4 beaker. 30 mL of boiling water was added into the beaker. After the crucible was soaked for 1 h, the crucible was picked up and washed using tweezers. A volume of a solution was controlled to be 50 mL. Then, the solution was filtered and then placed into a 400 mL beaker. The volume of the solution needed to be controlled carefully during the transfer process. After filtration, 20 mL of concentrated nitric acid was added at once to neutralize the solution and make the solution acidic.

After cooled to room temperature, the solution was added with solid KCl through continuous stirring until the solution reached a saturated state and the amount of the solid KCl reached an excess of 2 g. Then, 10 mL of potassium fluoride solution was added. After the potassium fluoride solution was added, a white precipitate appeared and was aged for 15 min. Filtration was performed using medium-speed quantitative filter paper. The beaker and the precipitate were washed three times with 8 mL of potassium chloride solution each time. The filter paper was removed and placed into the original beaker. 20 mL of potassium chloride ethanol solution was added, 10 drops of phenolphthalein were added, and the residual acid was neutralized with a sodium hydroxide standard solution. The filter paper was stirred and the beaker wall was scrubbed until the solution was light red. The resulting paper pulp was stirred with a glass rod to make reaction be complete.

200 mL of neutralized boiling water was added into the beaker. After the boiling water was boiled, 10 drops of phenolphthalein were added. The resulting solution was neutralized with the sodium hydroxide standard solution until the solution was slight red and then titrated with the sodium hydroxide standard solution until the solution was light red. A volume consumed during titration was recorded.

A mass percentage of the silicon element was obtained through calculation according to the following formula: ωsi=[(V-V0)×c×0.0072/m]×100%.

In the formula,
c was the concentration of the sodium hydroxide standard solution, in mol/L;
V was the volume of the sodium hydroxide standard solution consumed during titration;
V0 was the volume of the sodium hydroxide standard solution consumed by the blank;
0.0072 was the molar mass of 1/4Si; and
m was the mass of the sample.

### 3. Test of OI value of negative electrode plate

An X-ray diffractometer was used to test an OI value of a negative electrode plate, where a testing device was a D8 Advance XRD diffractometer produced by Bruker, Germany. Operating parameters were as follows: X-rays used CuKα radiation, a graphite monochromator was used, a current was 50 mA, a voltage was 45 kV, and a step size was 0.02°. A peak area of the (004) plane diffraction pattern was obtained through testing and recorded as C004, and a peak area of the (110) plane diffraction pattern was obtained through testing and recorded as C110. The OI value of the negative electrode plate was obtained through calculation according to C004/C110.

### 4. Test of porosity

A gas displacement method was used to test a porosity of a negative electrode plate. The testing principle was as follows: The Archimedes principle of gas tendency (density+mass/volume) was used, and the Boyle law (PV=nRT) of an inert gas that was a helium gas at 25°C under a standard atmospheric pressure was used. A true volume V0 of a material under test was tested. A total volume V of a sample was given, so that the porosity calculated was equal to (V-V0)/V×100%. The AccuPyc II 1340 device was used.

### 5. Test of weight loss rate

5 g of the negative electrode plate was weighed with reference to the standard GB/T 13464-2008 Thermal Analysis Test Method for Thermal Stability of Substances. A device with an instrument model STA449F3-QMS403C was used for testing. The atmosphere was a nitrogen atmosphere. A heating strategy was as follows: The temperature was increased to 800°C at a temperature rise velocity of 0.1 K/min to 50 K/min. TG sensitivity was 0.1 ug. DSC sensitivity was 1 uW. Test data was processed. The X-axis was a reference temperature, in °C. The Y-axis was heat flow power caused by per unit weight of the sample at a certain temperature, in mW/mg. A peak value, which was a peak apex, was a maximum heat flow power value. A peak area was heat enthalpy generated in processes such as phase transition and reactions between substances, in J/g.

### 6. Test of mass percentage of metal ions

### Test of mass percentage of metal ions in porous carbon framework

0.1 g of porous carbon framework containing a metal salt (without deposited silicon-based particles) was weighed and placed into a polytetrafluoroethylene PTFE beaker. 10 mL of HNO₃ and 2 mL of HF were added into the beaker. The beaker was placed on a heating plate at 220°C and then subjected to heating digestion until the sample was almost dried but not completely dried. Then, 10 mL of nitric acid was added into the beaker, so that the sample was fully dissolved but not dried. Then, the dissolved sample was cooled to room temperature. Filtration was performed three times with single-layer filter paper, and dilution was performed to obtain a fixed volume of 100 mL. The liquid sample was carried into a physical and chemical system via a carrier gas and then entered plasma in an aerosol form to be fully evaporated, dissociated, atomized, ionized, and excited, and then characteristic spectral lines of atoms were emitted. Qualitative analysis was performed based on the wavelength of the spectral lines. A mass percentage of metal ions was quantified according to a directly proportional relationship between the intensity of the lines and the concentration.

### Test of mass percentage of metal ions in silicon-carbon particles

0.1 g of silicon-carbon particles containing a metal salt was weighed and placed into a polytetrafluoroethylene PTFE beaker. 10 mL of HNO₃ and 2 mL of HF were added into the beaker. The beaker was placed on the heating plate at 220°C and then subjected to heating digestion until the sample was almost dried but not completely dried. Then, 10 mL of nitric acid was added into the beaker, so that the sample was fully dissolved but not dried. Then, the dissolved sample was cooled to room temperature. Filtration was performed three times with single-layer filter paper, and dilution was performed to obtain a fixed volume of 100 mL. The liquid sample was carried into a physical and chemical system via a carrier gas and then entered plasma in an aerosol form to be fully evaporated, dissociated, atomized, ionized, and excited, and then characteristic spectral lines of atoms were emitted. Qualitative analysis was performed based on the wavelength of the spectral lines. A mass percentage of metal ions was quantified according to a directly proportional relationship between the intensity of the lines and the concentration.

### II. Performance test of lithium-ion battery

### 1. Cycling performance test of lithium-ion battery

A test temperature was 25°C/45°C. The lithium-ion battery prepared in each of examples and comparative examples was charged to 4.4 V at a constant current of 0.7C, charged to 0.025C at a constant voltage, left standing for 5 minutes, and then discharged to 3.0 V at 0.5C. A capacity obtained in that step was an initial capacity. Then, a 0.7C charge and 0.5C discharge cycling test was performed. A ratio of the capacity of each cycle to the initial capacity was calculated to obtain a capacity degradation curve.

The number of cycles to a capacity retention rate of 90% at 25°C was recorded as cycling performance of the battery at room temperature; and the number of cycles to a capacity retention rate of 90% at 45°C was recorded as cycling performance of the battery at high temperature. The numbers of cycles in the above two cases were compared to obtain cycling performance of the material.

### 2. Discharge rate test of lithium-ion battery

At 25°C, the lithium-ion battery prepared in each of examples and comparative examples was discharged to 3.0 V at 0.2C, left standing for 5 min, charged to 4.45 V at 0.5C, charged to 0.05C at a constant voltage, and then left standing for 5 min. The discharge rate was adjusted. Discharge tests were performed at 0.2C, 0.5C, 1C, 1.5C, and 2.0C respectively to obtain discharge capacities. A capacity obtained at each rate was compared with a capacity obtained at 0.2C, and the rate performance was obtained according to a ratio of the capacity at 2C to the capacity at 0.2C.

### 3. Full-charge swelling rate test of lithium-ion battery

A spiral micrometer was used to measure the thickness of the lithium-ion battery at half charge (50% state of charge (SOC)). After 400 cycles, the battery was in a full-charge (100% SOC) state, and then the spiral micrometer was used to measure the thickness of the battery at that time again. The thickness was compared with the thickness of the lithium-ion battery at the initial half charge (50% SOC) to obtain a swelling rate of the battery at full charge (100% SOC).

### 4. Low-temperature performance test of lithium-ion battery

At 25°C, the lithium-ion battery prepared in each of examples and comparative examples was discharged to 3.0 V at 0.2C, left standing for 5 min, charged to 4.53 V at 0.5C, charged to 0.025C at a constant voltage, and then left standing for 5 min. Then, discharge test was performed at 0.2C to obtain a discharge capacity 1. Then, the lithium-ion battery was charged to 4.53 V at 0.5C, charged to 0.025C at a constant voltage, and then left standing for 5 min. Then, a temperature of a high-low temperature chamber was adjusted to -20°C. The lithium-ion battery was left standing for 60 min, and then discharge test was performed at 0.2C to obtain a discharge capacity 2. A ratio of the discharge capacity 2 to the discharge capacity 1 was used as the low-temperature discharge rate performance.

### Test results

Test results are shown in Table 2.

**Table 2**

| Item | Metal salt | Mass percentage of metal ions based on mass of porous carbon framework a (%) | Mass percentage of metal ions based on mass of silicon-carbon particle b (%) | Negative electrode plate | | | Battery performance at 25°C | | Battery performance 45°C | | Low-temperature discharge rate of battery (%) |
|---|---|---|---|---|---|---|---|---|---|---|---|
| | | | | Thickness of surface layer c (µm) | Average particle size of silicon-carbon particles d (µm) | (c/d) (%) | Cycles to 90% SOH | Swelling rate of battery after 500 cycles (%) | Cycles to 90% SOH | Swelling rate of battery after 500 cycles (%) | |
| Example 1 | Nickel sulfate | 0.020 | 0.0100 | 0.70 | 8.5 | 8.2 | 893 | 7.3 | 701 | 8.6 | 84.0 |
| Example 2 | Nickel sulfate | 0.050 | 0.0250 | 0.10 | 8.5 | 1.2 | 1117 | 6.1 | 922 | 7.2 | 85.3 |
| Example 3 | Nickel sulfate | 0.070 | 0.0350 | 0.45 | 8.5 | 5.3 | 967 | 6.5 | 874 | 7.8 | 84.1 |
| Example 4 | Nickel sulfate | 0.080 | 0.0400 | 0.50 | 8.5 | 5.9 | 929 | 6.9 | 812 | 8.0 | 83.2 |
| Example 5 | Nickel sulfate | 0.050 | 0.0150 | 0.65 | 8.5 | 7.6 | 1001 | 7.2 | 723 | 8.5 | 85.5 |
| Example 6 | Nickel sulfate | 0.050 | 0.0200 | 0.38 | 8.5 | 3.5 | 1051 | 6.3 | 900 | 7.4 | 85.3 |
| Example 7 | Nickel sulfate | 0.050 | 0.0280 | 0.30 | 8.5 | 4.5 | 1191 | 5.9 | 987 | 7.0 | 84.1 |
| Example 8 | Copper sulfate | 0.050 | 0.0250 | 0.42 | 8.5 | 4.9 | 989 | 6.5 | 899 | 7.7 | 84.2 |
| Example 9 | Iron chloride | 0.050 | 0.0250 | 0.57 | 8.5 | 6.7 | 945 | 7.0 | 839 | 8.1 | 83.9 |
| Example 10 | Zinc nitrate | 0.050 | 0.0250 | 0.62 | 8.5 | 7.3 | 901 | 7.7 | 798 | 8.9 | 83.5 |
| Comparative example 1 | Nickel sulfate | 0.002 | 0.0010 | 2.70 | 8.5 | 31.8 | 399 | 14.2 | 352 | 16.7 | 66.7 |
| Comparative example 2 | Nickel sulfate | 1.000 | 0.5000 | 3.50 | 8.5 | 41.2 | 436 | 13.6 | 377 | 15.7 | 69.3 |
| Comparative example 3 | Nickel sulfate | 0.003 | 0.0020 | 1.40 | 8.5 | 16.5 | 376 | 15.5 | 309 | 17.5 | 66.0 |
| Comparative example 4 | Nickel sulfate | 1.500 | 0.1000 | 2.90 | 8.5 | 34.1 | 411 | 14.0 | 300 | 18.9 | 67.1 |
| Comparative example 5 | No addition | / | / | 1.50 | 8.5 | 17.6 | 422 | 16.3 | 397 | 18.1 | 66.3 |
| Comparative example 6 | Nickel sulfate | 0.800 | 0.0040 | 1.40 | 8.5 | 16.5 | 398 | 14.5 | 389 | 17.1 | 67.2 |

It can be seen from Table 2 that through comparison of Comparative example 1 and Comparative example 2, a relatively small amount of metal ions and a relatively large amount of metal ions are added respectively, which is not conducive to improving the electrochemical performance.

As compared with Comparative examples 1 to 4, the ratio of a/b in Examples 1 to 4 remains unchanged, that is, the amount of silicon depositing in the silicon-carbon particles remains unchanged. The amount of metal ions has a certain effect on the thickness of the surface layer and the electrical performance. When the amount of metal ions is increased, the metal ions uniformly dispersed on the inner wall of the porous carbon framework can induce the uniform deposition of silane. For example, in Example 3, good electrochemical performance is exhibited. When the amount of metal ions is further increased, the dispersion uniformity of the metal ions on the inner wall of the porous carbon framework is adjusted. For example, as compared with Example 3, the surface layer in Example 4 is thicker.

Through comparison of Example 2 and Examples 5 to 7, with the same amount of metal ions added, the amount of deposited silicon has a certain effect on deposition uniformity. A difference of the mass percentage a% of the metal ions based on the mass of the porous carbon framework and the mass percentage b% of the metal ions based on the mass of the silicon-carbon particle can reflect the amount of deposited silicon in the porous carbon framework. In Example 2 and Examples 5 to 7, with the same amount of metal ions added (based on the mass of the porous carbon framework, the mass percentages a% of the metal ions are the same), the amounts of deposited silicon change (the difference of a% and b% changes). For example, as compared with Example 2, the amount of silicon in Example 5 is higher, and the reaction induction effect of the metal ions is reduced, causing uneven deposition and slight deterioration of the performance of the surface layer. As compared with Example 2, the amount of silicon in Example 7 is lower, and the induction effect at that time further improves the deposition uniformity, thus allowing the silicon-carbon particles to have better structural stability and performance.

In Comparative example 5, Example 2, and Examples 8 to 10, the effects of different types of metal salts on the surface layer and the electrical performance are compared. It can be seen that with the same amount of metal salt added, different types of metal ions have different induction effects on silane deposition and ultimately exhibit different effects on the electrical performance. However, in Comparative example 5, no metal salt is added, poor electrochemical performance is exhibited.

**Table 3**

| Item | Battery performance | | | | | |
|---|---|---|---|---|---|---|
| | OI value f of negative electrode active material layer after 1000 cycles | Battery performance at 25°C | | Battery performance at 45°C | | Low-temperature discharge rate (%) |
| | | Cycles to 90% SOH | Swelling rate of battery after 500 cycles (%) | Cycles to 90% SOH | Swelling rate of battery after 500 cycles (%) | |
| Example 2 | 11.2 | 1117 | 6.10 | 922 | 7.20 | 85.30 |
| Example 11 | 9.30 | 1039 | 6.40 | 846 | 8.50 | 85.50 |
| Example 12 | 7.20 | 927 | 7.30 | 743 | 9.70 | 85.70 |
| Example 13 | 6.10 | 800 | 9.40 | 677 | 10.20 | 84.00 |
| Example 14 | 4.50 | 623 | 9.80 | 512 | 11.10 | 83.60 |
| Comparative example 6 | 3.50 | 512 | 12.89 | 435 | 13.91 | 76.85 |

A more uniform deposition of the silicon element in the silicon-carbon particles leads to a higher mixing uniformity in the process of mixing the silicon-carbon particles and the graphite particles, making it less likely to cause density differences between particles and property differences when the surface is rich in silicon. The deposition uniformity of the silicon element in the silicon-carbon particles also has a certain effect on the performance of the surface layer, thus causing change in the OI value of the negative electrode active material layer.

It can be seen from Table 3 that the comparison of Comparative example 6, Example 2, and Examples 11 to 14 indicates a correlation between the OI value of the negative electrode active material layer in the negative electrode plate and the electrical performance. A thicker surface layer leads to a smaller OI value of the negative electrode active material layer after cycling. The reason may be that a thicker surface layer leads to more by-product layers on the surface of the corresponding silicon-carbon particle, higher expansion of the corresponding silicon-carbon particle, a looser negative electrode plate, and a smaller OI value, and is more conducive to the kinetic performance. Alternatively, the reason may be that a thicker surface layer on the surface of the silicon-carbon particle affects the lithium intercalation depth of the graphite, so that the lithium intercalation depth increases, and the interlayer structure of the graphite is damaged, thus causing a decrease in the OI value. Thus, as the OI value of the electrode plate decreases during cycling, the cycling performance and the swelling suppression are deteriorated, but the kinetic performance is slightly improved. After the OI value is further reduced, the kinetic performance is also deteriorated. Therefore, the deterioration of the kinetic performance caused by the by-product layer is more dominant. However, in Comparative example 6, poor cycling performance, swelling suppression, and kinetic performance are exhibited.

**Table 4**

| Item | Battery performance | | | | |
|---|---|---|---|---|---|
| | Porosity of negative electrode plate after 1000 cycles g (%) | Battery performance at 25°C | | Battery performance at 45°C | |
| | | Cycles to 90% SOH | Swelling rate of battery after 500 cycles (%) | Cycles to 90% SOH | Swelling rate of battery after 500 cycles (%) |
| Example 2 | 21.3 | 1117 | 6.10 | 922 | 7.20 |
| Example 15 | 18.4 | 1021 | 6.50 | 833 | 8.60 |
| Example 16 | 16.3 | 917 | 7.50 | 719 | 9.90 |
| Example 17 | 24.3 | 789 | 9.70 | 667 | 10.40 |
| Example 18 | 28.9 | 611 | 10.10 | 500 | 11.30 |

A more uniform deposition of the silicon element in the silicon-carbon particles leads to a higher mixing uniformity in the process of mixing the silicon-carbon particles and the graphite particles, making it less likely to cause differences in pore structures of the negative electrode active material layer, thereby allowing for few differences in the pore structures of various parts of the negative electrode active material layer.

It can be seen from Table 4 that the comparison of Example 2 and Examples 15 to 18 indicates a correlation between the porosity of the negative electrode plate and the electrical performance. When the thickness of the surface layer of the silicon-carbon particles increases, the expansion of the silicon-carbon particles causes the porosity of the negative electrode plate to decrease and simultaneously causes deterioration of the cycling performance in terms of the electrical performance. When the thickness of the surface layer further increases, the porosity of the negative electrode plate increases. This is because the expansion at this time causes the porosity between particles to increase, but the final cycling performance and swelling suppression are deteriorated.

**Table 5**

| Item | Battery performance | | | | |
|---|---|---|---|---|---|
| | Weight loss rate of negative electrode plate after 1000 cycles h (%) | Battery performance at 25°C | | Battery performance at 45°C | |
| | | Cycles to 90% SOH | Swelling rate of battery after 500 cycles (%) | Cycles to 90% SOH | Swelling rate of battery after 500 cycles (%) |
| Example 2 | 14.1 | 1117 | 6.10 | 922 | 7.20 |
| Example 19 | 16.7 | 1001 | 6.60 | 827 | 8.60 |
| Example 20 | 18.2 | 910 | 7.60 | 711 | 9.90 |
| Example 21 | 19.3 | 749 | 9.90 | 678 | 10.60 |
| Example 22 | 22.9 | 600 | 10.30 | 508 | 11.30 |

A more uniform deposition of the silicon element in the silicon-carbon particles leads to a higher performance consistency of the surface layers on the surfaces of the silicon-carbon particles, so that the surface layers are not excessively thick, that is, the silicon-carbon particles can be well protected.

It can be seen from Table 5 that the comparison of Example 2 and Examples 18 to 21 indicates a correlation between the weight loss rate h of the negative electrode plate at 800°C during thermogravimetric treatment under the inert atmosphere and the electrical performance. The surface layer is mainly formed by the chemical reaction of electrolyte components. When the thickness of the surface layer increases, the surface layer decomposes at 800°C. A greater thermal weight loss at this time leads to deterioration of the cycling performance and swelling suppression of the corresponding battery. When the thermal weight loss of the corresponding battery in Comparative example 8 reaches 29.2%, the corresponding battery has poor electrical performance.

**Table 6**

| Item | Battery performance | | | | |
|---|---|---|---|---|---|
| | Mass percentage of silicon element after 1000 cycles I (%) | Battery performance at 25°C | | Battery performance at 45°C | |
| | | Cycles to 90% SOH | Swelling rate of battery after 500 cycles (%) | Cycles to 90% SOH | Swelling rate of battery after 500 cycles (%) |
| Example 2 | 10.0 | 1117 | 6.10 | 922 | 7.20 |
| Example 23 | 5.0 | 1190 | 6.00 | 998 | 7.00 |
| Example 24 | 13.0 | 1010 | 6.80 | 856 | 8.90 |
| Example 25 | 21.1 | 900 | 7.90 | 723 | 10.10 |
| Example 26 | 28.9 | 701 | 10.50 | 600 | 11.30 |

When the deposition uniformity of the silicon element in the silicon-carbon particles is higher, the silicon-carbon particles have higher cycling stability during cycling and are not prone to side reactions with the electrolyte. When the deposition uniformity of the silicon element is lower, the silicon-carbon particles are partially rich in silicon, so that active silicon is prone to reaction with the electrolyte, the active silicon is consumed, and the amount of silicon is reduced.

It can be seen from Table 6 that the comparison of Example 2 and Examples 23 to 26 indicates the influence of the mass percentage I of the silicon element in the negative electrode plate on the electrical performance. As the amount of the silicon element increases, the cycling performance and swelling suppression are deteriorated. When the amount of the silicon element increases to 41.3 in Comparative example 9, poor electrical performance is exhibited.

Although illustrative embodiments have been demonstrated and described, persons skilled in the art should understand that the foregoing embodiments cannot be construed as limitations on this application, and that these embodiments may be changed, replaced, and modified without departing from the spirit, principle, and scope of this application.

## Claims

1. An electrochemical apparatus, comprising a negative electrode plate and an electrolyte, wherein the negative electrode plate comprises a negative electrode current collector and a negative electrode active material layer disposed on at least one surface of the negative electrode current collector and containing a negative electrode active material, the negative electrode active material comprising silicon-carbon particles and graphite particles, wherein
each silicon-carbon particle has a surface layer, a thickness of the surface layer is c µm, an average particle size of the silicon-carbon particles is d µm, and 0.42%<c/d<16.0%;
wherein the surface layer contains at least three elements selected from the group consisting of C, O, F, P, N, Si, and Li.

2. The electrochemical apparatus according to claim 1, wherein 5.0<d<12.0.

3. The electrochemical apparatus according to claim 1 or 2, wherein 0.1≤c<1.

4. The electrochemical apparatus according to any one of claims 1 to 3, wherein an orientation index OI value of the negative electrode active material layer is f, and 4.0<f<13.0.

5. The electrochemical apparatus according to any one of claims 1 to 4, wherein a porosity of the negative electrode plate is g, and 15.0%<g<30.0%.

6. The electrochemical apparatus according to any one of claims 1 to 5, wherein a weight loss rate of the negative electrode plate at 800°C is h, and 10.0%<h<25.0%.

7. The electrochemical apparatus according to any one of claims 1 to 6, wherein, based on a mass of the negative electrode active material, a mass percentage of the silicon element in the negative electrode active material is I, and 0.1%<I<15%.

8. The electrochemical apparatus according to any one of claims 1 to 7, wherein, based on a mass of the negative electrode active material, a mass percentage of the silicon-carbon particles is N, and 1%≤N≤20%.

9. The electrochemical apparatus according to any one of claims 1 to 8, wherein
the silicon-carbon particle comprises metal ions; the metal ions comprise at least one of iron ions, aluminum ions, copper ions, nickel ions, manganese ions, tin ions, or germanium ions; and based on a mass of the silicon-carbon particle, a mass percentage of the metal ions is 0.005% to 0.05%.

10. The electrochemical apparatus according to any one of claims 1 to 9, wherein 6.0<d<10.0.

11. The electrochemical apparatus according to any one of claims 1 to 10, wherein 1.0%≤c/d≤8.5%.

12. An electronic apparatus, comprising the electrochemical apparatus according to any one of claims 1 to 11.

13. A preparation method of the electrochemical apparatus according to any one of claims 1 to 11, comprising:
providing a porous carbon framework;
providing a metal salt and placing the metal salt into pores of the porous carbon framework; and
providing a silicon-containing precursor on the porous carbon framework containing the metal salt, so that the silicon-containing precursor undergoes a chemical vapor reaction to form silicon-based particles, and the silicon-based particles deposit in the pores of the porous carbon framework to form the silicon-carbon particles.

14. The preparation method according to claim 13, wherein
after the step of providing a silicon-containing precursor on the porous carbon framework containing the metal salt, so that the silicon-containing precursor undergoes a chemical vapor reaction to form silicon-based particles, and the silicon-based particles deposit in the pores of the porous carbon framework, the preparation method further comprises: providing a carbon coating layer on at least a part of a surface of the porous carbon framework; wherein
metal ions in the metal salt comprise at least one of iron ions, aluminum ions, copper ions, nickel ions, manganese ions, tin ions, or germanium ions.

15. The preparation method according to claim 13 or 14, wherein the porous carbon framework satisfies at least one of the following conditions:
(1) a pore volume of the porous carbon framework is greater than 0.4 g/cc; or
(2) the porous carbon framework comprises micropores with a pore size less than 2 nm, wherein based on the pore volume of the porous carbon framework, a volume percentage of a pore volume of the micropores is greater than 50%.
